# EUROPEAN PATENT SPECIFICATION

(11) **EP 3 900 268 B1**
(45) Date of publication and mention of the grant of the patent: **24.07.2024**
(21) Application number: 19702087.8
(22) Date of filing: 29.01.2019
(51) Int. Cl.: H04L 41/14, H04L 43/028, H04L 41/0803

(54) **METHODS AND APPARATUS FOR USER PLANE FUNCTION ANALYTICS**
VERFAHREN UND VORRICHTUNG ZUR FUNKTIONSANALYSE AUF BENUTZEREBENE
PROCÉDÉS ET APPAREIL POUR L'ANALYSE D'UNE FONCTION DE PLAN UTILISATEUR

(30) Priority: 20.12.2018 EP 18382954
(43) Date of publication of application: 27.10.2021
(73) Proprietor: TELEFONAKTIEBOLAGET LM ERICSSON (PUBL), 164 83 Stockholm (SE)
(72) Inventor: PUENTE PESTAÑA, Miguel Angel, 28007 Madrid (ES); JIMENEZ CORDON, Carlos, 28032 Madrid (ES); MUÑOZ DE LA TORRE ALONSO, Miguel Angel, 28002 Madrid (ES)
(74) Representative: Ericsson
(86) International application number: PCT/EP2019/052055
(87) International publication number: WO 2020/126108

(56) References cited:
- "3rd Generation Partnership Project; Technical Specification Group Core Network and Terminals; 5G System; Policy and Charging Control signalling flows and QoS parameter mapping; Stage 3 (Release 15)", 17 December 2018 (2018-12-17), XP051573159, Retrieved from the Internet <URL:http://www.3gpp.org/ftp/tsg%5Fct/WG3%5Finterworking%5Fex%2DCN3/DRAFT%5FSPEC%5FIMPLEMENTATIONS/CT%5F82> [retrieved on 20181217]
- ERICSSON: "UPF data collection", vol. SA WG2, no. Xi'an, China; 20190408 - 20190412, 2 April 2019 (2019-04-02), XP051719465, Retrieved from the Internet <URL:http://www.3gpp.org/ftp/tsg%5Fsa/WG2%5FArch/TSGS2%5F132%5FXiAn/Docs/S2%2D1903302%2Ezip> [retrieved on 20190402]
- "3rd Generation Partnership Project; Technical Specification Group Services and System Aspects; Study of Enablers for Network Automation for 5G (Release 16)", 3GPP STANDARD; TECHNICAL REPORT; 3GPP TR 23.791, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.0, 19 December 2018 (2018-12-19), pages 1 - 121, XP051591223
- CONVIDA WIRELESS LLC ET AL: "Updating Solution 15 - Providing UE Analytics to the NWDAF via the User Plane", vol. SA WG2, no. Dongguan, P.R. China; 20181015 - 20181019, 19 October 2018 (2018-10-19), XP051540319, Retrieved from the Internet <URL:http://www.3gpp.org/ftp/tsg%5Fsa/WG2%5FArch/TSGS2%5F129%5FDongguan/Docs/S2%2D1811538%2Ezip> [retrieved on 20181019]
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.4.0, 18 December 2018 (2018-12-18), pages 1 - 236, XP051591141

## Description

### Technical Field

Embodiments described herein relate to methods and apparatus for configuring user plane function analytics using a service based network architecture.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly, as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

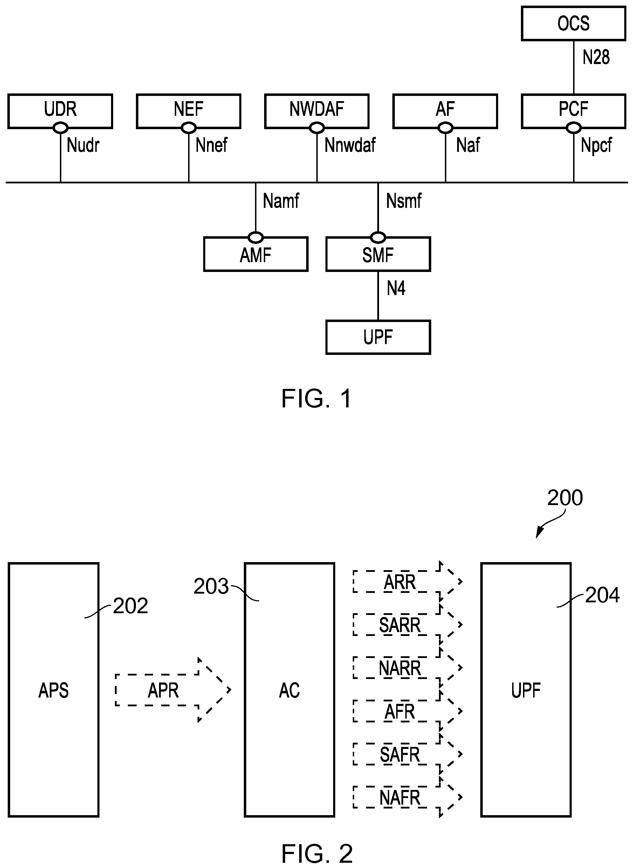

5G telecommunication networks are being developed which make use of a service based architecture (SBA). **Figure** 1 illustrates an example of a reference SBA network.

The Public Land Mobile Network 100 comprises a number of network functions (NFs). In this example the NFs illustrated are a Unified Data Repository (UDR), a Network Exposure Function (NEF), a Network Data Analytics Function (NWDAF), a Policy Control Function (PCF), an Application Function (AF), an Access and Mobility Management Function (AMF), a Session Management Function (SMF), a Policy Control Function (PCF), and a User Plane Function (UPF). A User Equipment (UE) may then connect to this 5GC network via a Radio Access Network (RAN).

The NWDAF is a new Network Function being standardized by 3GPP in 5GC. The NWDAF represents an operator managed network analytics logical function. The NWDAF provides slice specific network data analytics to the PCF and NSSF. For example, the NWDAF may provide network data analytics (i.e., load level information) to the PCF and the NSSF on a network slice level and the NWDAF may not be required to be aware of the current subscribers using the slice. The NWDAF may notify and/or publish slice specific network status analytic information to each of the PCF(s) and/or NSSF that is subscribed to it. The PCF(s) and NSSF may collect directly slice specific network status analytic information from the NWDAF. This information may not be subscriber specific. The PCF may then use this analytics information in its policy decisions. The NSSF may use the load level information provided by NWDAF for network slice selection.

The NWDAF is located in the Service Based Architecture (SBA) and currently offers the following services:

| **Service Name** | **Service Operations** | **Operation Semantics** | **Example Consumer(s)** |
|---|---|---|---|
| Nnwdaf_EventsSubscription | Subscribe | Subscribe / Notify | PCF, NSSF |
| | Unsubscribe | | PCF, NSSF |
| | Notify | | PCF, NSSF |
| Nnwdaf_AnalyticsInfo | Request | Request / Response | PCF, NSSF |
| | | | |

Data may be sent from NFs to the NWDAF through the Service Based Interfaces (SBIs) between the NFs, by either leveraging the existing event exposure mechanisms or by means of other Application Programming Interfaces (APIs) which may still be undefined.

The UPF may be an important source of data for Network Data Analytics Function (NWDAF). User plane metrics such as traffic Key Performance Indicators (KPIs) for example throughput, latency and Round Trip Time (RTT), and UPF load, etc. may be required by the NWDAF. The NWDAF may also require digested data from the UPF, e.g. user Quality of Experience (QoE), application usage statistics, UPF load patterns or predictions, etc.

It is not currently defined what the reporting mechanism for analytics from a UPF is as the UPF does not sit in SBA and cannot currently use its mechanisms to interact with the NWDAF. It is also not defined how an operator defines what analytics it wants to execute on a per user or service/application basis.

3GPP TR 23.791 is a 3GPP report wherein analytics solutions and enablers of Network Automation for 5G are studied.

3GPP S2-1811538 is a contribution document to TR 23.791 that updates solution 15 proposing a solution for UE analytics.

3GPP TS 23.501 is the base 3GPP specification for 5G.

### Summary

According to embodiments described herein there is provided a method, in an analytics controller in a service based architecture communications network. The method comprises obtaining an indication of an analytics policy rule, APR, wherein the APR indicates analytics to be carried out by a user plane function node, particularly wherein the indication of the APR is obtained responsive to a Protocol Data Unit, PDU, session establishment notification message from a Session Management Function, SMF; translating the APR into at least one rule setting a condition for reporting analytics to a network data analytics function, NWDAF, or for forwarding packets to an analytics engine, wherein the rule applies to one of: a particular user and particular traffic type; a particular user for all traffic types; and a particular user plane function node; and transmitting the at least one rule to the user plane function node.

According to some embodiments there is provided a method in an Analytics Policy Server, APS. The method comprises storing at least one Analytics Policy Rule indicating analytics to be carried out by a user plane function node; responsive to receiving an APR request from an analytics controller comprising a filter, wherein the filter comprises one or more of: an identification of a user, an identification of a user plane Function, and an identification of a traffic type, determining at least one APR associated with the filter, and transmitting the at least one APR associated with the filter to an Analytics Controller.

According to some embodiments there is provided a method in a User Plane Function, UPF. The method comprises receiving at least one rule from an analytics controller setting a condition for reporting analytics to a network data analytics function, NWDAF, or for forwarding packets to an analytics engine, wherein the rule applies to one of: a particular user and particular traffic type; a particular user regardless of traffic type; and a particular user plane function node; and reporting or forwarding traffic received at the UPF based on the at least one rule.

According to some embodiments there is provided an analytics controller in a service based architecture communications network. The analytics control comprises processing circuitry configured to: obtain an indication of an analytics policy rule, APR, wherein the APR indicates analytics to be carried out by a user plane function node, particularly wherein the indication of the APR is obtained responsive to a Protocol Data Unit, PDU, session establishment notification message from a Session Management Function, SMF; translate the APR into at least one rule setting a condition for reporting analytics to a network data analytics function, NWDAF, or for forwarding packets to an analytics engine, wherein the rule applies to one of: a particular user and particular traffic type; a particular user for all traffic types; and a particular user plane function node; and transmit the at least one rule to the user plane function node.

According to some embodiments there is provided an Analytics Policy Server, APS. The APS comprises processing circuitry configured to: store at least one Analytics Policy Rule indicating analytics to be carried out by a user plane function node; responsive to receiving an APR request from an analytics controller comprising a filter, wherein the filter comprises one or more of: an identification of a user, an identification of a user plane Function, and an identification of a traffic type, determine at least one APR associated with the filter, and transmit the at least one APR associated with the filter to an Analytics Controller.

According to some embodiments there is provided a User Plane Function, UPF. The UPF comprises processing circuitry configured to: receive at least one rule from an analytics controller setting a condition for reporting analytics to a network data analytics function, NWDAF, or for forwarding packets to an analytics engine, wherein the rule applies to one of: a particular user and particular traffic type; a particular user regardless of traffic type; and a particular user plane function node; and report or forwarding traffic received at the UPF based on the at least one rule.

### Brief Description of the Drawings

For a better understanding of the present invention, and to show how it may be put into effect, reference will now be made, by way of example only, to the accompanying drawings, in which:
Figure 1 illustrates an example of a reference Service Based Architecture (SBA) network;
Figure 2 illustrates a network architecture according to embodiments described herein from a high-level point of view;
Figure 3 illustrates a method in an analytics controller in a service based architecture communications network in accordance with some embodiments;
Figure 4 illustrates a method in an Analytics Policy Server, APS in a service based architecture communications network in accordance with some embodiments;
Figure 5 illustrates a method in a User Plane Function, UPF in communication with a service based architecture communications network in accordance with some embodiments;
Figure 1 illustrates an example of a reference Service Based Architecture (SBA) network;
Figure 2 illustrates a network architecture according to embodiments described herein from a high-level point of view;

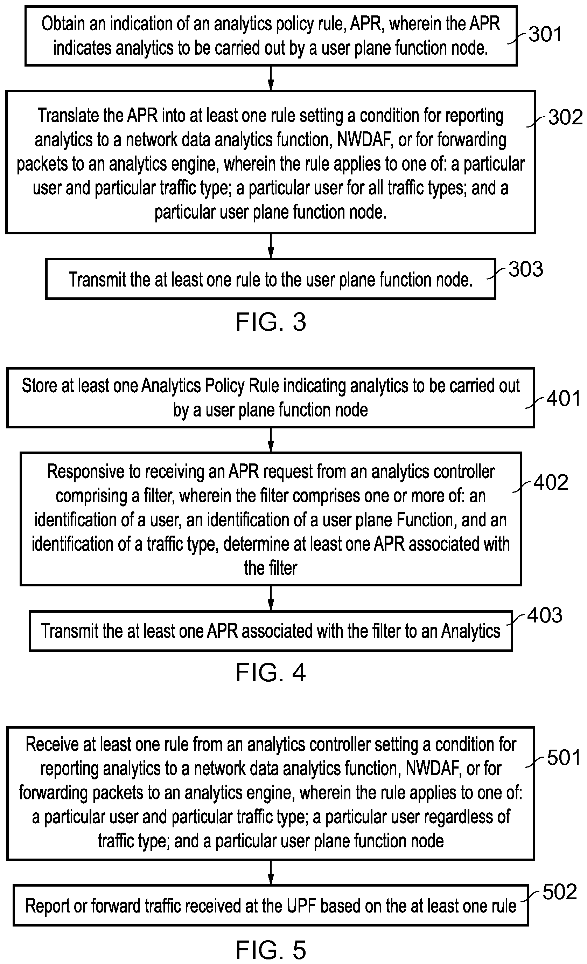

Figure 3 illustrates a method in an analytics controller in a service based architecture communications network in accordance with some embodiments;
Figure 4 illustrates a method in an Analytics Policy Server, APS in a service based architecture communications network in accordance with some embodiments;
Figure 5 illustrates a method in a User Plane Function, UPF in communication with a service based architecture communications network in accordance with some embodiments;

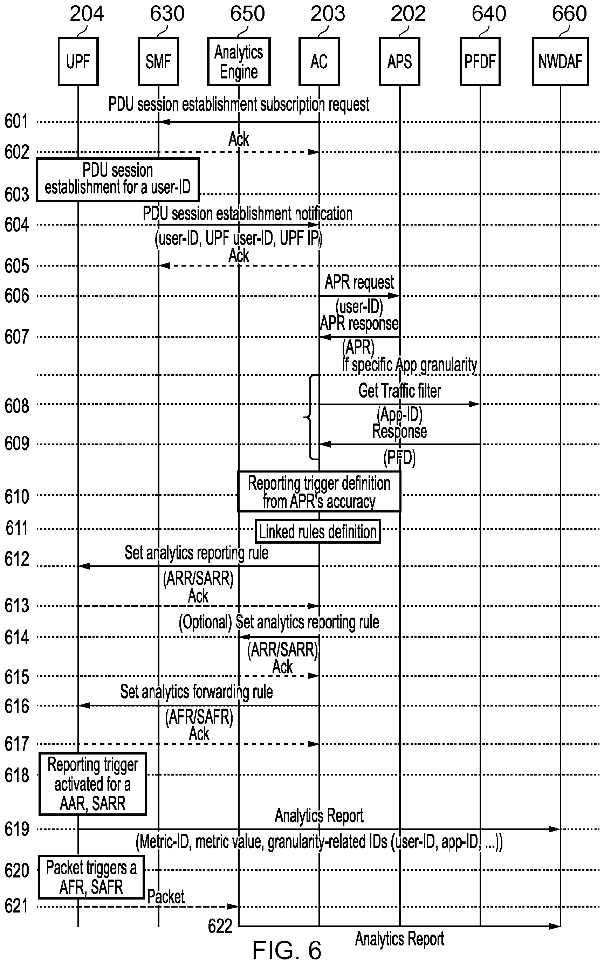

Figure 6 illustrates illustrates an example in which the provisioning of Analytics Policy Rules is triggered by a Protocol Data Unit (PDU) session establishment;

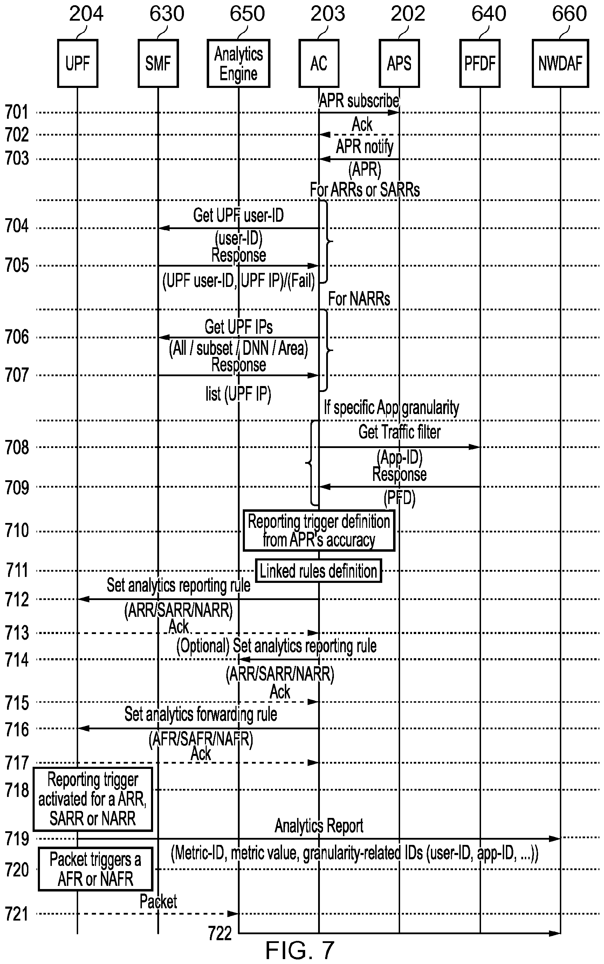

Figure 7 illustrates an example in which the provisioning of Analytics Policy Rules is triggered by an APR notification in the APS;

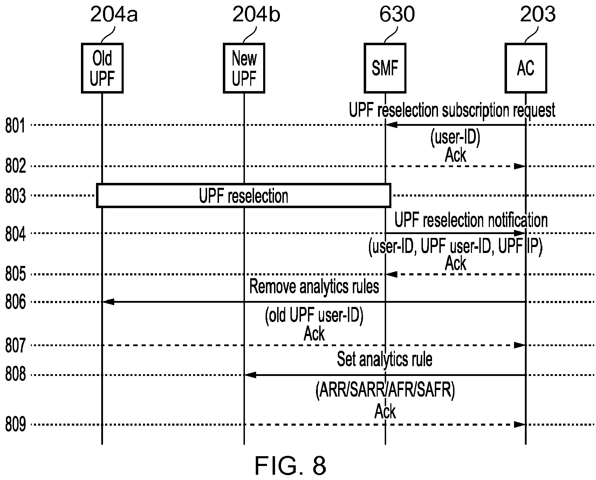

Figure 8 illustrates the provisioning of APRs and analytics rules triggered by a UPF reselection notification in the Session Management Function, SMF;

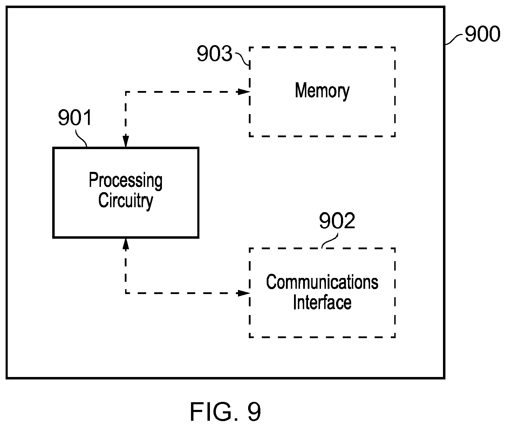

Figure 9 illustrates an analytics controller comprising processing circuitry according to some embodiments;

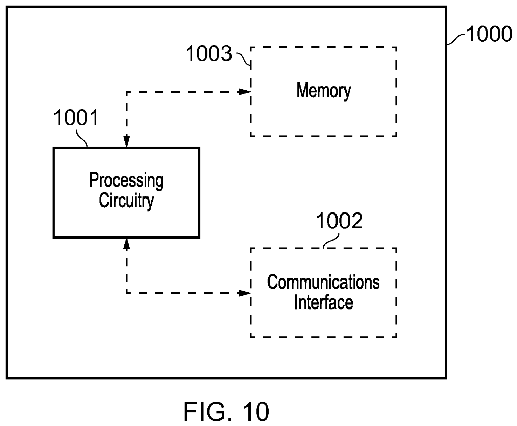

Figure 10 illustrates an Analytics Policy Server (APS) comprising processing circuitry according to some embodiments;

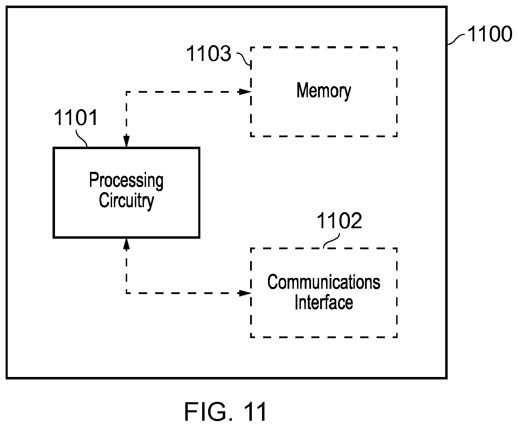

Figure 11 illustrates a User Plane Function (UPF) comprising processing circuitry according to some embodiments;

### Description

The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers that are specially adapted to carry out the processing disclosed herein, based on the execution of such programs. Nodes that communicate using the air interface also have suitable radio communications circuitry. Moreover, the technology may additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing modules or one or more controllers, and the terms computer, processor, processing module and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Embodiments described herein allow for the configuration of the UPF to report analytics towards a NWDAF. This may also be applied to any other analytics engine.

**Figure 2** illustrates a network architecture from a high-level point of view according to embodiments described herein.

The network 200 comprises an Analytics Policy Server (APS) 202. The APS 202 allows the operator to define what specific analytics are to be executed for specific users, user groups, applications, application types, etc. The APS 202 may transmit Analytics Policy Rules (APRs) to an Analytics Controller (AC) 203. From a deployment perspective, embodiments described herein describe a standalone APS 202, but the APS 202 may be also collocated and deployed within other existing entities, for example, the PCF or NWDAF as illustrated in Figure 1.

The network 200 further comprises the Analytics Controller (AC) 203. The AC 203 comprises two interfaces: a Service Based Interface (SBI) towards the Network Functions in the Service Based Architecture, i.e. as described above in Figure 1, (AC sits in in the SBA), and another interface towards the User Plane Function (UPF) 204. The AC's 203 main functionality may be to control the UPF's 204 analytics based on an input received from the APS 202. In other words, the AC 203 may translate APRs into lower level rules that are transmitted to UPF 204. From a deployment perspective, embodiments described herein describe a standalone AC 203, but the AC 203 may also be collocated and deployed within other existing entities, for example, the UPF 204 itself, the SMF (as illustrated in Figure 1) or in some examples the AC 203 and APS 202 may be collocated together.

The AC 203 may translate the APRs received from the APS 202, and may generate the different rules that are sent to UPF 204. Then, based on the received rules, the UPF 204 may carry out the corresponding reporting and forwarding actions for the traffic traversing the UPF 204.

**Figure 3** illustrates a method in an analytics controller, for example, AC 203, in a service-based architecture communications network.

In step 301, the AC 203 obtains an indication of an analytics policy rule, APR, wherein the APR indicates analytics to be carried out by a user plane function node, for example UPF 204. The APR may be obtained from an APS 202 as illustrated in Figure 2. Alternatively, the APS 202 may be collocated with the AC 203, and the AC 203 may therefore obtain the APR from a local memory, or from a network update from a network controller node.

In step 302, the AC 203 translates the APR into at least one rule setting a condition for reporting analytics to a network data analytics function, NWDAF, or for forwarding packets to an analytics engine, wherein the rule applies to one of: a particular user and particular traffic type; a particular user for all traffic types; and a particular user plane function node.

Each APR may comprise the following fields:
1) An APR-ID to identify the APR;
2) A Metric-ID to indicate the type of data to be reported. For example, the Metric-ID may comprise values or events;
3) A reporting granularity level indicating the metric reporting granularity, i.e. if the metric is reported on, for example, a per user basis, per user group, per application;
4) A specificity indicating whether the reporting granularity level is "specific" or "non-specific". A Specific granularity level refers to a specific entity. For example, a specific user (user-ID). For specific granularity, the identification of the entity the reporting granularity refers to may be included along with the specificity field. For combined reporting granularity levels (e.g. specific app executed by a specific user), the identifications of the involved entities may be included along with the specificity field (e.g. both user-ID and app-ID).
   Non-specific granularity may refer to all the entities of the granularity level. E.g. if a metric shall be reported for all users. Non-specific APRs may not include any granularity-related identifications (e.g. user ID) along with the specificity field, but the different entity's identifications may be included in the metric reports from the UPF or analytics engine. For combined reporting granularity levels (e.g. user and application), the identification of the combined entities may be included along with all the metric reports from the UPF or analytics engine (e.g. both user-ID and app-ID). Specific granularities may override the non-specific ones for the entities that the specific granularity applies to.
5) An accuracy indicating the accuracy level for the metric, i.e. the maximum difference between two consecutive reported values. The accuracy may comprise, for example, an absolute value or a percentage.

For example, the reporting granularity level may specify that the reporting is to be performed on or more of: a per user level, a per user group level, a per application level, a per application type level, a per device level, a per device type level, a per user equipment location or area level, a per user plane function level, a per user plane function group level, a per user plane function area level, a per DNN/ DN Access Identifier (DNAI), for uplink or downlink, or for a particular time period.

Step 302 may therefore comprise translating the APR based on the reporting granularity level. For example, if the reporting granularity is both a user and application level granularity the AC 203 may translate the APR into a rule applying to a particular user and particular traffic type. If the reporting granularity is a user level granularity with no application level granularity, the AC 203 may translate the APR into a rule applying to a particular user for all traffic types. If the reporting granularity contains no user level granularity, the AC 203 may translate the APR into a rule applying to a particular user plane function node.

In step 303, the AC 203 transmits the at least one rule to the user plane function UPF node, e.g. UPF 204.

It will be appreciated that the at least one rule may comprise forwarding rules, reporting rules or a combination thereof.

In particular the at least one rule may comprise a first rule, wherein the first rule comprises one or more of: a metric identification, a reporting condition, an identification of a second rule to be executed sequentially after the first rule, an analytics engine address, and an identification of a port of the analytics engine. In this example, the first rule comprises a reporting rule.

For example, the metric identification may indicate the type of data to be reported. The metric identification may indicate that values or events are to be reported. Examples of metrics identifications are:
o Traffic KPIs (e.g. Volume, Throughput, Delay/latency (RTT), Packet Loss rate, Number of bursts, Volume per burst, burst occurrence, etc.)
o Application/Service metrics, e.g. application events (e.g. Start, Stop), application usage, quality (QoE), etc.
o Network metrics, e.g. Data Network Name (DNN)/ Data Network Access Identifier (DNAI), etc.
o Terminal metrics, e.g. terminal type, etc.
o Access metrics, e.g. access type, etc.
o Security metrics, e.g. Distributed Denial of Service (DDoS) or spoofing detection events.

Metrics may also have different types. For example:
1) Now or real time values - if the metric value refers to the instant the metric is sent.
2) Statistics over a period of time (for example, max/min, average, percentiles, etc.).
3) Future values or predictions - if the metric value refers to a future time, which may be included also along with the value.
4) A pattern - if the information sent describes how the metric evolves over time.

The condition for reporting may indicate when the reporting is to be performed. For example, the condition may indicate that the metric is to be reported periodically or upon the metric reaching a certain threshold. This condition may comprise a reporting trigger type (e.g. periodic, threshold, etc.), and the necessary parameters for each reporting trigger type (i.e. period value for periodic reporting and the variable name and threshold value for threshold-based reporting). The condition may be derived from the accuracy in the APR.

In examples, where the first rule comprises an identification of a second rule to be executed sequentially after the first rule, this allows several rules to be executed by a UPF in a predefined order.

In examples where the first rule comprises an analytics engine address, this may indicate where the UPF 204 is to send a report to, as defined in the first rule.

In some examples, the first rule comprises an Analytics Reporting Rule, ARR, applying to a particular user and particular traffic type. In these examples, the first rule may further comprise an identification of the particular user and a traffic filter filtering the particular traffic type. In other words, the identification of the particular user may indicate for which user the first rule is to be applied, and the traffic filter may indicate for which traffic type the first rule is to be applied. In other words, the ARR may be evaluated by a UPF when a packet belonging to the particular user matches the traffic filter. The identification of the particular user may comprise a UPF user-ID to identify the user this ARR applies to. The UPF user-ID may be different than the user-ID in the APR. UPF user-ID may be a user-ID as such (e.g. international mobile subscriber identity (IMSI)) or another identification associated to the user (e.g. N4 session-ID).

In some examples, the first rule comprises a Session Analytics Reporting Rule, SARR, applying to a particular user for all traffic types. In these examples, the first rule may further comprise an identification of the particular user. In other words, the identification of the particular user may indicate for which user the first rule is to be applied. In other words, a SARR may be evaluated by a UPF for all packets belonging to the particular user's session.

The identification of the particular user may comprise a UPF user-ID to identify the user this ARR applies to. The UPF user-ID may be different than the user-ID in the APR. UPF user-ID may be a user-ID as such (e.g. IMSI) or another identification associated to the user (e.g. N4 session-ID).

In some examples, the first rule comprises a Node Analytics Reporting Rule, NARR, applying to a particular user plane function node. In these examples, the first rule may further comprise a traffic filter filtering the particular traffic type. In other words, the traffic filter may indicate for which traffic type the first rule is to be applied at the UPF. In other words, an NARR may be evaluated for all packets traversing the UPF node, or all packets matching the particular traffic filter.

In some examples, the at least one rule comprises a forwarding rule. The forwarding rule may comprise one or more of: a destination interface identifying an interface the packet should be forwarded to, an analytics engine address to send the packet to the analytics engine, an identification of transport level marking, and a header enrichment parameter. The identification of transport level marking may indicate if a certain transport level marking (e.g. TOS) shall be applied when forwarding the packet. The header enrichment parameter indicates if the packet shall be marked or enriched with a specific value before sending it towards the analytics engine. Both an indication of the header field to enrich and the enrichment value may be included.

In particular, the forwarding rule may comprise an Analytics Forwarding Rule (AFR) applying to a particular user and particular traffic type. An AFR may be evaluated by the UPF when a packet belonging to a particular user matches the traffic filter.

In some examples, the forwarding rule may comprise a Session Analytics Forwarding Rule (SAFR) applying to a particular user for all traffic types. A SAFR may be evaluated by the UPF for all packets belonging to a particular user's session.

In some examples, the forwarding rule may comprise a Node Analytics Forwarding Rules (NAFR) applying to a particular user plane function node. A NAFR may be evaluated by the UPF for all packets traversing the UPF node. NAFRs are created by the Analytics Controller and sent to UPF.

As mentioned previously, it may be desirable for the UPF to evaluate more than one rule, and in these circumstances it may be advantageous for the rules to be evaluated in a particular order. The AC may therefore translate the APR into a first rule setting a first condition for reporting analytics to an NWDAF, or for forwarding packets to an analytics engine, and a second rule setting a second condition for reporting analytics to an NWDAF, or for forwarding packets to an analytics engine; and may link the two rules such that the second rule is to be executed sequentially after the first rule. The linkage may be indicated as part of the first rule to the UPF.

**Figure 4** illustrates a method in an Analytics Policy Server, APS, for example, APS 202 illustrated in Figure 2.

In step 401 the APS 202 stores at least one Analytics Policy Rule indicating analytics to be carried out by a user plane function node, for example UPF 204.

In step 402, the APS 202 responsive to receiving an APR request from an analytics controller comprising a filter, wherein the filter comprises one or more of: an identification of a user, an identification of a user plane Function, and an identification of a traffic type, determining at least one APR associated with the filter. The APR may be an APR as described above with reference to Figure 3.

In step 403, the APS 202 transmits the at least one APR associated with the filter to an Analytics Controller, for example AC 203.

In some example, the method may further comprise responsive to an updated or new APR in the APS 202, transmitting an APR notification message to the analytics controller comprising an indication of the updated or new APR. In other words, new APRs may be added to the APS 202, or APRs may be altered/updated. In response to this, the APS 202 may transmit the new or updated APR to the AC 203.

**Figure 5** illustrates a method in a User Plane Function, UPF, for example UPF 204 in Figure 2.

In step 501, the UPF 204 receives at least one rule from an analytics controller, for example AC 203 in Figure 2, setting a condition for reporting analytics to a network data analytics function, NWDAF, or for forwarding packets to an analytics engine, wherein the rule applies to one of: a particular user and particular traffic type; a particular user regardless of traffic type; and a particular user plane function node. The at least one rule may comprise a reporting rule or a forwarding rule as described above with reference to Figure 3.

In step 502, the UPF 204 reports or forwards traffic received at the UPF 204 based on the at least one rule.

**Figure 6** illustrates an example in which the provisioning of APRs by the APS 202 to the AC 203 is triggered by a Protocol Data Unit (PDU) session establishment.

In this example, the AC 203 first subscribes with an SMF 630 to receive notifications when a new PDU session is established.

For example, in step 601, the AC 203 sends to SMF 630 a PDU session establishment subscription request message to receive notifications when a new PDU session is established

In step 602, the SMF 630 acknowledges the subscription request.

In step 603, a PDU session for a particular user (have a particular user-ID) is established.

In step 604, responsive to the subscription request transmitted by the AC 204 in step 601 the SMF transmits to AC 204 a PDU session establishment notification message indicating the user-ID, the UPF user-ID and the UPF IP address. It will, however, be appreciated that in some examples no subscription is required.

In step 605, the AC 204 acknowledges the PDU session establishment notification.

The AC 204, may then obtain the indication of the APR responsive to a Protocol Data Unit, PDU, session establishment notification message from a Session Management Function, SMF.

In step 606 therefore, the AC 204, in this example, transmits to an Analytics Policy Server, APS 202, an APR request message comprising a filter, wherein the filter comprises one or more of: an identification of a user, an identification of a user plane Function, and an identification of a traffic type. In this example, the filter comprises the user-ID of the user that the PDU session has been established for.

In step 607, the APS 202 transmits an APR response message comprising the indication of an APR (or list of APRs). As described with reference to Figure 5, the APS 202 determines at least one APR stored by the APS 202 which is associated with the filter and transmits the at least one APR to the AC 203.

In other words, in this example, the APR request message comprises the identification of a user, and the APR is associated to the identification of the user.

In examples where the APR or list of APRs received in step 607 refer to a specific application identification, steps 608 and 609 may take place.

In step 608, the AC 203 responsive to the APR referring to an application identification, transmits a traffic filter request comprising the application identification to a Packet Flow Description Function, PFDF, 640.

In step 609, the AC 203 receives a traffic filter from the PFDF 640 associated with eh application identification.

In step 610 the AC 203 derives an appropriate condition for reporting from the accuracy received in the APR. For example, if the metric in the APR is known to have constant values during some periods, but changes quickly sometimes, a threshold-based reporting may be the best option.

In some examples, the AC 203 may also change the condition for reporting for a certain rule dynamically, if it sees that the required accuracy indicated in the APR is not met (this process may dynamically trigger in AC).

In step 611 the AC 203 may define any linking between rules if it is the case that some shall be executed sequentially by the UPF, and configures the Linked ARR/SARR/NARR fields accordingly as described above.

Steps 612 and 613 are optional and may be performed if the UPF 204 is to perform the reporting.

In step 612, the AC 203 generates the appropriate reporting rules (in this example either ARR or SARR as they will relate to a particular user) and transmits them to the UPF 204.

In step 613, the UPF 204 acknowledges the receipt of the reporting rules.

In step 614, the AC 203 optionally transmits the ARRs or SARRs to an external analytics engine 650. In this example, the reporting may be carried out by the analytics engine 650. The UPF 204 may therefore execute forwarding rules and may forward packets to that analytics engine 650 such that he analytics engine 650 may perform the reporting rules.

In step 615, the analytics engine 650 acknowledges receipt of the ARRs or SARRs.

Steps 616 and 617 may be optional, and may be performed if the analytics engine 650 is to perform the reporting.

In step 616, the AC 203 generates any appropriate forwarding rules (AFR, SAFR) and sends them to UPF.

In step 617, the UPF 204 acknowledges the forwarding rules.

In examples where steps 612 and 613 have taken place, steps 618 and 619 may occur.

In step 618, traffic belonging to the particular user having user-ID traverses the UPF and a condition for reporting is met according to a reporting rule received in step 612.

In step 619, the UPF 204 transmits an analytics report to NWDAF 660 including the metric identification, metric value, and the reporting granularity level identifications (e.g. user-ID, application-ID, etc.).

In examples where steps 614 to 617 have taken place, steps 620 to 622 may occur.

In step 620, the traffic belonging to the user traverses the UPF and a packet triggers a forwarding rule, for example by meeting a condition for forwarding in a forwarding rule (AFR or SAFR).

In step 621, the UPF 204 the forwards the packet towards the analytic engine. (NWDAF or an external analytics engine) according to the forwarding rule.

In step 622, the analytics engine 650 may then transmit an analytics report to the NWDAF 660 according to the reporting rule received in step 614.

**Figure 7** illustrates an example in which the provisioning of APRs to the AC is triggered by an APR notification in the APS.

In step 701, the AC 203 subscribed to receive APR notifications from the APS 202. In step 702, the APS 202 acknowledges the subscription request.

In step 703, responsive to the subscription to APR notifications at an Analytics Policy Server, APS, the AC 203 receives an APR from the APS. This may occur in response to a new or updated APR in the APS. It will also be appreciated that in some examples no subscription is necessary for the AC 203 to receive APR notifications.

In step 704, responsive to the rule applying to a particular user, i.e. an ARR or SARR, the AC 203 transmits a request for a user plane function, UPF, user-ID to an SMF 630. This request may comprise the user identification in the APR.

In step 705, the AC 203 receives the UPF user-ID from the SMF 630. In cases where the user has no active UPF session, the SMF 630 may respond with a failure indication. The AC 203 may also receive the UPF Internet Protocol (IP) address

In step 706 response to the rule applying to a UPF node, i.e. a NARR, the AC 203 transmits a request for UPF IP addresses. This request may include an indication of whether the AC 203 wants to retrieve all UPFs under the SMF 630, or only a subset of them for optimization purposes, the UPFs associated to a certain DNN, or the UPFs belonging to a certain area.

In step 707, the SMF 630 responds to the AC 203 with a list of the UPF IP addresses as requested.

In examples where the APR received in step 703 refers to a specific application identification, steps 708 and 709 may take place.

In step 708, the AC 203 responsive to the APR referring to an application identification, transmits a traffic filter request comprising the application identification to a Packet Flow Description Function, PFDF, 640.

In step 709, the AC 203 receives a traffic filter from the PFDF 640 associated with the application identification.

In step 710 the AC 203 derives an appropriate condition for reporting from the accuracy received in the APR. For example, if the metric in the APR is known to have constant values during some periods, but changes quickly sometimes, a threshold-based reporting may be the best option.

In some examples, the AC 203 may also change the condition for reporting for a certain rule dynamically, if it sees that the required accuracy indicated in the APR is not met (this process may dynamically trigger in AC).

In step 711 the AC may define any linking between rules if it is the case that some shall be executed sequentially by the UPF, and configures the Linked ARR/SARR/NARR fields accordingly as described above.

Steps 712 and 713 are performed if the UPF 204 is to perform the reporting.

In step 712, the AC 203 generates the appropriate reporting rules (in this example either ARR SARR or NARR) and transmits them to the UPF 204.

In step 713, the UPF 204 acknowledges the receipt of the reporting rules.

In step 714, the AC 203 optionally transmits the ARR/SARR/NARRs to an external analytics engine 650. In this example, the reporting may be carried out by the analytics engine 650. The UPF 204 may therefore execute forwarding rules, and may forward packets to that analytics engine 650 such that he analytics engine 650 may perform the reporting rules.

In step 715, the analytics engine 650 acknowledges receipt of the reporting rules.

Steps 716 and 717 may be optional, and may be performed if the analytics engine 650 is to perform the reporting.

In step 716, the AC 203 generates any appropriate forwarding rules (AFR, SAFR, NAFR) and sends them to UPF.

In step 717, the UPF 204 acknowledges the forwarding rules.

In examples where steps 712 and 713 have taken place, steps 718 and 719 may occur.

In step 718, traffic belonging to the particular user having user-ID traverses the UPF and a condition for reporting is met according to a reporting rule received in step 712.

In step 719, the UPF 204 transmits an analytics report to NWDAF 660 including the metric identification, metric value, and the reporting granularity level identifications (e.g. user-ID, application-ID, etc.).

In examples where steps 714 to 717 have taken place, steps 720 to 722 may occur.

In step 720, the traffic belonging to the user traverses the UPF and a packet triggers a forwarding rule, for example by meeting a condition for forwarding in a forwarding rule (AFR, SAFR or NAFR).

In step 721, the UPF 204 the forwards the packet towards the analytic engine. (NWDAF or an external analytics engine) according to the forwarding rule.

In step 722, the analytics engine 650 may then transmit an analytics report to the NWDAF 760 according to the reporting rule received in step 614.

**Figure 8** illustrates the provisioning of APRs and analytics rules triggered by an UPF reselection notification in the SMF. It consists on the following steps:
In step 801 AC 203 sends to SMF 630 a UPF reselection subscription request message to receive notifications when the UPF is reselected for a particular user identification. The user identification may be included as parameter in the message.

In step 802, the SMF 630 acknowledges the request for a UPF reselection subscription.

In step 803, the SMF 630 reselects the UPF for that user identification received in step 801. The UPF is changed from UPF 204a to UPF 204b.

In step 804, the SMF 630 transmits a UPF reselection notification message to AC 203 comprising the user-ID, the UPF user-ID and the UPF IP address of the new selected UPF 204b.

In step 805, the AC 203 acknowledges the UPD reselection notification.

In step 806, the AC 203 transmits to the old UPF 204a a remove analytics rules message including the old UPF user-ID (i.e. the UPF user-ID for the old UPF 204a).

In step 807, the old UPF 204a acknowledges the remove analytics rules message, and removes the analytics rules for the particular user identified in the remove analytics rules message.

In step 808, the AC 203 transmits to the new UPF 204b all the analytics rules (ARR/SARR/AFR/SAFR) for the particular user.

In step 809, the new UPF 204b acknowledges the analytics rules.

**Figure 9** illustrates an analytics controller 900 comprising processing circuitry (or logic) 901. The processing circuitry 901 controls the operation of the analytics controller 900 and can implement the method described herein in relation to an analytics controller 900. The processing circuitry 901 can comprise one or more processors, processing units, multi-core processors or modules that are configured or programmed to control the analytics controller 900 in the manner described herein. In particular implementations, the processing circuitry 901 may comprise a plurality of software and/or hardware modules that are each configured to perform, or are for performing, individual or multiple steps of the method described herein in relation to the analytics controller 900.

Briefly, the processing circuitry 901 of the analytics controller 900 is configured to obtain an indication of an analytics policy rule, APR, wherein the APR indicates analytics to be carried out by a user plane function node; translate the APR into at least one rule setting a condition for reporting analytics to a network data analytics function, NWDAF, or for forwarding packets to an analytics engine, wherein the rule applies to one of: a particular user and particular traffic type; a particular user for all traffic types; and a particular user plane function node; and transmit the at least one rule to the user plane function node.

In some embodiments, the analytics controller 900 may optionally comprise a communications interface 902. The communications interface 902 of the analytics controller 900 can be for use in communicating with other nodes, such as other virtual nodes. For example, the communications interface 902 of the analytics controller 900 can be configured to transmit to and/or receive from other nodes requests, resources, information, data, signals, or similar. The processing circuitry 901 of the analytics controller 900 may be configured to control the communications interface 902 of the analytics controller 900 to transmit to and/or receive from other nodes requests, resources, information, data, signals, or similar.

Optionally, the analytics controller 900 may comprise a memory 903. In some embodiments, the memory 903 of the analytics controller 900 can be configured to store program code that can be executed by the processing circuitry 901 of the analytics controller 900 to perform the method described herein in relation to the analytics controller 900. Alternatively or in addition, the memory 903 of the analytics controller 900, can be configured to store any requests, resources, information, data, signals, or similar that are described herein. The processing circuitry 901 of the analytics controller 900 may be configured to control the memory 903 of the analytics controller 900 to store any requests, resources, information, data, signals, or similar that are described herein.

**Figure 10** illustrates an Analytics Policy Server (APS) 1000 comprising processing circuitry (or logic) 1001. The processing circuitry 1001 controls the operation of the APS 1000 and can implement the method described herein in relation to an APS 1000. The processing circuitry 1001 can comprise one or more processors, processing units, multi-core processors or modules that are configured or programmed to control the APS 1000 in the manner described herein. In particular implementations, the processing circuitry 1001 may comprise a plurality of software and/or hardware modules that are each configured to perform, or are for performing, individual or multiple steps of the method described herein in relation to the APS 1000.

Briefly, the processing circuitry 1001 of the APS 1000 is configured to store at least one Analytics Policy Rule indicating analytics to be carried out by a user plane function node; responsive to receiving an APR request from an analytics controller comprising a filter, wherein the filter comprises one or more of: an identification of a user, an identification of a user plane Function, and an identification of a traffic type, determine at least one APR associated with the filter, and transmit the at least one APR associated with the filter to an Analytics Controller.

In some embodiments, the APS 1000 may optionally comprise a communications interface 1002. The communications interface 1002 of the APS 1000 can be for use in communicating with other nodes, such as other virtual nodes. For example, the communications interface 1002 of the APS 1000 may be configured to transmit to and/or receive from other nodes requests, resources, information, data, signals, or similar. The processing circuitry 1001 of the APS 1000 may be configured to control the communications interface 1002 of the APS 1000 to transmit to and/or receive from other nodes requests, resources, information, data, signals, or similar.

Optionally, the APS 1000 may comprise a memory 1003. In some embodiments, the memory 1003 of the APS 1000 can be configured to store program code that can be executed by the processing circuitry 1001 of the APS 1000 to perform the method described herein in relation to the APS 1000. Alternatively or in addition, the memory 1003 of the APS 1000, can be configured to store any requests, resources, information, data, signals, or similar that are described herein. The processing circuitry 1001 of the APS 1000 may be configured to control the memory 1003 of the APS 1000 to store any requests, resources, information, data, signals, or similar that are described herein.

**Figure 11** illustrates a User Plane Function (UPF) 1100 comprising processing circuitry (or logic) 1101. The processing circuitry 1101 controls the operation of the UPF 1100 and can implement the method described herein in relation to an UPF 1100. The processing circuitry 1101 can comprise one or more processors, processing units, multi-core processors or modules that are configured or programmed to control the UPF 1100 in the manner described herein. In particular implementations, the processing circuitry 1101 may comprise a plurality of software and/or hardware modules that are each configured to perform, or are for performing, individual or multiple steps of the method described herein in relation to the UPF 1100.

Briefly, the processing circuitry 1101 of the UPF 1100 is configured to receive at least one rule from an analytics controller setting a condition for reporting analytics to a network data analytics function, NWDAF, or for forwarding packets to an analytics engine, wherein the rule applies to one of: a particular user and particular traffic type; a particular user regardless of traffic type; and a particular user plane function node; and report or forward traffic received at the UPF based on the at least one rule.

In some embodiments, the UPF 1100 may optionally comprise a communications interface 1102. The communications interface 1102 of the UPF 1100 can be for use in communicating with other nodes, such as other virtual nodes. For example, the communications interface 1102 of the UPF 1100 may be configured to transmit to and/or receive from other nodes requests, resources, information, data, signals, or similar. The processing circuitry 1101 of the UPF 1100 may be configured to control the communications interface 1102 of the UPF 1100 to transmit to and/or receive from other nodes requests, resources, information, data, signals, or similar.

Optionally, the UPF 1100 may comprise a memory 1103. In some embodiments, the memory 1103 of the UPF 1100 can be configured to store program code that can be executed by the processing circuitry 1101 of the UPF 1100 to perform the method described herein in relation to the UPF 1100. Alternatively or in addition, the memory 1103 of the UPF 1100, can be configured to store any requests, resources, information, data, signals, or similar that are described herein. The processing circuitry 1101 of the UPF 1100 may be configured to control the memory 1103 of the UPF 1100 to store any requests, resources, information, data, signals, or similar that are described herein.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method, in an analytics controller in a service based architecture communications network, the method comprising;
obtaining (301) an indication of an analytics policy rule, APR, wherein the APR indicates analytics to be carried out by a user plane function node;
translating (302) the APR into at least one rule setting a condition for reporting analytics to a network data analytics function, NWDAF, or for forwarding packets to an analytics engine, wherein the rule applies to one of: a particular user and particular traffic type; a particular user for all traffic types; and a particular user plane function node; and
transmitting (303) the at least one rule to the user plane function node.

2. The method as claimed in any preceding claim wherein the step of obtaining the indication of the APR comprises:
transmitting to an Analytics Policy Server, APS, an APR request message comprising a filter, wherein the filter comprises one or more of: an identification of a user, an identification of a user plane Function, and an identification of a traffic type; and
receiving an APR response message comprising the indication of the APR.

3. The method as claimed in claim 2, wherein the APR request message comprises an identification of a user, and wherein the APR is associated to the identification of the user.

4. The method as claimed in claim 2 or 3, further comprising:
obtaining the indication of the APR responsive to a Protocol Data Unit, PDU, session establishment notification message from a Session Management Function, SMF, the method particularly further comprising first subscribing with the SMF to receive notifications when a new PDU session is established.

5. The method as claimed in claim 1 wherein the step of obtaining the indication of the APR comprises:
responsive to a subscription to APR notifications at an Analytics Policy Server, APS, receiving the APR from the APS.

6. The method as claimed in any preceding claim wherein the APR indicates a reporting granularity level or an accuracy level, particularly wherein the reporting granularity level comprises an indication to report on one or more of: a per user level, a per user group level, a per application level, a per application type level, a per device level, a per device type level, a per user equipment location or area level, a per user plane function level, a per user plane function group level, a per user plane function area level, a per Data Network Name, DNN, or Data Network Access Identifier, DNAI, for uplink or downlink, or for a particular time period.

7. The method as claimed in any preceding claim wherein the at least one rule comprises a first rule, wherein the first rule comprises one or more of:
a metric identification,
a reporting condition,
an identification of a second rule to be executed sequentially after the first rule, and
an analytics engine address;
and/or
at least one of:
- an Analytics Reporting Rule, ARR, applying to a particular user and particular traffic type, and wherein the first rule further comprises:
an identification of the particular user,
a traffic filter filtering the particular traffic type;
- a Session Analytics Reporting Rule, SARR, applying to a particular user for all traffic types, and wherein the first rule further comprises:
an identification of the particular user;
- a Node Analytics Reporting Rule, NARR, applying to a particular user plane function node, and wherein the first rule further comprises:
a traffic filter filtering the particular traffic type; and
- a forwarding rule comprising one or more of:
a destination interface identifying an interface the packet should be forwarded to,
an analytics engine address,
an identification of transport level marking, and
a header enrichment parameter.

8. A method in an Analytics Policy Server, APS, the method comprising:
storing (401) at least one Analytics Policy Rule indicating analytics to be carried out by a user plane function node;
responsive (402) to receiving an APR request from an analytics controller comprising a filter, wherein the filter comprises one or more of: an identification of a user, an identification of a user plane Function, and an identification of a traffic type, determining at least one APR associated with the filter, and
transmitting (403) the at least one APR associated with the filter to an Analytics Controller.

9. The method as claimed in claim 8, further comprising:
responsive to an updated or new APR in the APS,
transmitting an APR notification message to the analytics controller comprising an indication of the updated or new APR.

10. A method in a User Plane Function, UPF, the method comprising:
receiving (501) at least one rule from an analytics controller setting a condition for reporting analytics to a network data analytics function, NWDAF, or for forwarding packets to an analytics engine, wherein the rule applies to one of: a particular user and particular traffic type; a particular user regardless of traffic type; and a particular user plane function node; and
reporting (502) or forwarding traffic received at the UPF based on the at least one rule.

11. The method as claimed in claim 10 wherein the at least one rule comprises a first rule, wherein the first rule comprises one or more of:
a metric identification,
a reporting condition,
an identification of a second rule to be executed sequentially after the first rule, and
an analytics engine address;
wherein the first rule comprises at least one of:
- an Analytics Reporting Rule, ARR, applying to a particular user and particular traffic type, and wherein the first rule further comprises:
an identification of the particular user,
a traffic filter filtering the particular traffic type;
- a Session Analytics Reporting Rule, SARR, applying to a particular user, and wherein the first rule further comprises:
an identification of the particular user;
- a Node Analytics Reporting Rule, NARR, applying to a particular user plane function node, and wherein the first rule further comprises:
a traffic filter filtering the particular traffic type; and
- a forwarding rule comprising one or more of:
a destination interface identifying an interface the packet should be forwarded to,
an analytics engine address,
an identification of transport level marking, and
a header enrichment parameter.

12. An analytics controller in a service based architecture communications network, the analytics control comprising processing circuitry configured to:
obtain an indication of an analytics policy rule, APR, wherein the APR indicates analytics to be carried out by a user plane function node;
translate the APR into at least one rule setting a condition for reporting analytics to a network data analytics function, NWDAF, or for forwarding packets to an analytics engine, wherein the rule applies to one of: a particular user and particular traffic type; a particular user for all traffic types; and a particular user plane function node; and
transmit the at least one rule to the user plane function node.

13. The analytics controller of claim 12, being configured to perform the method of any one of claims 2 to 7.

14. An Analytics Policy Server, APS, the APS comprising processing circuitry configured to:
store at least one Analytics Policy Rule indicating analytics to be carried out by a user plane function node;
responsive to receiving an APR request from an analytics controller comprising a filter, wherein the filter comprises one or more of: an identification of a user, an identification of a user plane Function, and an identification of a traffic type, determine at least one APR associated with the filter, and
transmit the at least one APR associated with the filter to an Analytics Controller.

15. The APS as claimed in claim 14 wherein the processing circuitry is further configured to:
responsive to an updated or new APR in the APS, transmit an APR notification message to the analytics controller comprising an indication of the updated or new APR.

16. A User Plane Function, UPF, comprising processing circuitry configured to:
receive at least one rule from an analytics controller setting a condition for reporting analytics to a network data analytics function, NWDAF, or for forwarding packets to an analytics engine, wherein the rule applies to one of: a particular user and particular traffic type; a particular user regardless of traffic type; and a particular user plane function node; and
report or forwarding traffic received at the UPF based on the at least one rule.

17. The UPF as claimed in claim 16, wherein the at least one rule comprises a first rule, wherein the first rule comprises one or more of:
a metric identification,
a reporting condition,
an identification of a second rule to be executed sequentially after the first rule, and
an analytics engine address;
wherein the first rule comprises at least one of:
- an Analytics Reporting Rule, ARR, applying to a particular user and particular traffic type, and wherein the first rule further comprises:
an identification of the particular user,
a traffic filter filtering the particular traffic type;
- a Session Analytics Reporting Rule, SARR, applying to a particular user, and wherein the first rule further comprises:
an identification of the particular user;
- a Node Analytics Reporting Rule, NARR, applying to a particular user plane function node, and wherein the first rule further comprises:
a traffic filter filtering the particular traffic type; and
- a forwarding rule comprising one or more of:
a destination interface identifying an interface the packet should be forwarded to,
an analytics engine address,
an identification of transport level marking, and
a header enrichment parameter.

## Patentansprüche

1. Verfahren in einer Analysesteuerung in einem Kommunikationsnetzwerk mit dienstbasierter Architektur, wobei das Verfahren umfasst:
Erhalten (301) einer Anzeige einer Analyserichtlinienregel, APR, wobei die APR Analysen anzeigt, die von einem Benutzerebenen-Funktionsknoten durchgeführt werden sollen;
Übersetzen (302) der APR in mindestens eine Regel, die eine Bedingung zum Melden von Analysen an eine Netzwerkdatenanalysefunktion, NWDAF, oder zum Weiterleiten von Paketen an eine Analyse-Engine festlegt, wobei die Regel für eines gilt von: einem bestimmten Benutzer und einen bestimmten Verkehrstyp;
einem bestimmten Benutzer für alle Verkehrstypen; und
einem bestimmten Benutzerebenen-Funktionsknoten; und
Senden (303) der mindestens einen Regel an den Benutzerebenen-Funktionsknoten.

2. Verfahren nach einem der vorhergehenden Ansprüche, wobei der Schritt des Erhaltens der Anzeige der APR ferner umfasst:
Senden einer APR-Anforderungsnachricht, die einen Filter umfasst, an einen Analyserichtlinienserver, APS, wobei der Filter eines oder mehreres umfasst von:
einer Identifikation eines Benutzers, einer Identifikation einer Benutzerebenen-Funktion und einer Identifikation eines Verkehrstyps; und
Empfangen einer APR-Antwortnachricht, die die Anzeige der APR umfasst.

3. Verfahren nach Anspruch 2, wobei die APR-Anforderungsnachricht eine Identifikation eines Benutzers umfasst, und wobei die APR mit der Identifikation des Benutzers assoziiert ist.

4. Verfahren nach Anspruch 2 oder 3, ferner umfassend:
Erhalten der Anzeige der APR in Reaktion auf eine Protokolldateneinheit-
Sitzungsaufbaubenachrichtigungsnachricht, PDU-Sitzungsaufbaubenachrichtigungsnachricht, von einer Sitzungsverwaltungsfunktion, SMF, wobei das Verfahren ferner insbesondere ein erstes Abonnieren bei der SMF umfasst, um Benachrichtigungen zu erhalten, wenn eine neue PDU-Sitzung aufgebaut wird.

5. Verfahren nach Anspruch 1, wobei der Schritt des Erhaltens der Anzeige der APR ferner umfasst:
Empfangen der APR von einem Analyserichtlinienserver, APS, in Reaktion auf ein Abonnement für APR-Benachrichtigungen beim APS.

6. Verfahren nach einem der vorhergehenden Ansprüche, wobei die APR einen Meldungsgranularitätsgrad oder einen Genauigkeitsgrad anzeigt, wobei insbesondere der Meldungsgranularitätsgrad eine Anzeige umfasst, um eines oder mehreres zu melden von: einem Grad pro Benutzer, einem Grad pro Benutzergruppe, einem Grad pro Anwendung, einem Grad pro Anwendungstyp, einem Grad pro Vorrichtung, einem Grad pro Vorrichtungstyp, einem Grad pro Standort oder Bereich einer Benutzereinrichtung, einem Grad pro Benutzerebenen-Funktion, einem Grad pro Benutzerebenen-Funktionsgruppe, einem Grad pro Benutzerebenen-Funktionsbereich, einem pro Datennetzwerknamen, DNN, oder Datennetzwerk-Zugangskennung, DNAI, für Uplink- oder Downlink oder für einen bestimmten Zeitraum.

7. Verfahren nach einem der vorhergehenden Ansprüche, wobei die mindestens eine Regel eine erste Regel umfasst, wobei die erste Regel eines oder mehreres umfasst von:
einer Metrik-Identifikation,
einer Meldungsbedingung,
einer Identifikation einer zweiten Regel, die sequenziell nach der ersten Regel ausgeführt werden soll, und
einer Analyse-Engine-Adresse; und/oder mindestens eines von:
- einer Analysemeldungsregel, ARR, die für einen bestimmten Benutzer und einen bestimmten Verkehrstyp gilt, und wobei die erste Regel ferner umfasst:
eine Identifikation des bestimmten Benutzers;
einen Verkehrsfilter, der den bestimmten Verkehrstyp herausfiltert;
- einer Sitzungsanalysemeldungsregel, SARR, die für einen bestimmten Benutzer für alle Verkehrstypen gilt, und wobei die erste Regel ferner umfasst:
eine Identifikation des bestimmten Benutzers;
- einer Knotenanalysemeldungsregel, NARR, die für einen bestimmten Benutzereben-Funktionsknoten gilt, und wobei die erste Regel ferner umfasst:
einen Verkehrsfilter, der den bestimmten Verkehrstyp herausfiltert; und
- eine Weiterleitungsregel, die eines oder mehreres umfasst von:
einer Zielschnittstelle, die eine Schnittstelle identifiziert, an die das Paket weitergeleitet werden sollte,
einer Analyse-Engine-Adresse,
einer Identifikation einer Transportebenen-Markierung und
einem Header-Anreicherungsparameter.

8. Verfahren in einem Analyserichtlinienserver, APS, wobei das Verfahren umfasst:
Speichern (401) mindestens einer Analyserichtlinienregel, APR, die Analysen anzeigt, die von einem Benutzerebenen-Funktionsknoten durchgeführt werden sollen;
Bestimmen mindestens einer APR, die mit einem Filter assoziiert ist, in Reaktion (402) auf den Empfang einer APR-Anforderung, die den Filter umfasst, von einer Analysesteuerung, wobei der Filter eines oder mehreres umfasst von: einer Identifikation eines Benutzers, einer Identifikation einer Benutzerebenen-Funktion und einer Identifikation eines Verkehrstyps; und
Senden (403) der mindestens einen mit dem Filter assoziierten APR an eine Analysesteuerung.

9. Verfahren nach Anspruch 8, ferner umfassend:
in Reaktion auf eine aktualisierte oder neue APR im APS
Senden einer APR-Benachrichtigungsnachricht, die eine Anzeige der aktualisierten oder neuen APR umfasst, an die Analysesteuerung.

10. Verfahren in einer Benutzerebenen-Funktion, UPF, wobei das Verfahren umfasst:
Empfangen (501) mindestens einer Regel, die eine Bedingung zum Melden von Analysen an eine Netzwerkdatenanalysefunktion, NWDAF, oder zum Weiterleiten von Paketen an eine Analyse-Engine festlegt, von der Analysesteuerung, wobei die Regel für eines gilt von: einem bestimmten Benutzer und
einen bestimmten Verkehrstyp; einem bestimmten Benutzer ungeachtet des Verkehrstyps; und einem bestimmten Benutzerebenen-Funktionsknoten; und
Melden (502) oder Weiterleiten von Verkehr, der an der UPF empfangen wird, basierend auf der mindestens einen Regel.

11. Verfahren nach Anspruch 10, wobei die mindestens eine Regel eine erste Regel umfasst, wobei die erste Regel eines oder mehreres umfasst von:
einer Metrik-Identifikation,
einer Meldungsbedingung,
einer Identifikation einer zweiten Regel, die sequenziell nach der ersten Regel ausgeführt werden soll, und einer Analyse-Engine-Adresse;
wobei die erste Regel mindestens eines umfasst von:
- einer Analysemeldungsregel, ARR, die für einen bestimmten Benutzer und einen bestimmten Verkehrstyp gilt, und wobei die erste Regel ferner umfasst:
eine Identifikation des bestimmten Benutzers;
einen Verkehrsfilter, der den bestimmten Verkehrstyp herausfiltert;
- einer Sitzungsanalysemeldungsregel, SARR, die für einen bestimmten Benutzer gilt, und wobei die erste Regel ferner umfasst:
eine Identifikation des bestimmten Benutzers;
- einer Knotenanalysemeldungsregel, NARR, die für einen bestimmten Benutzereben-Funktionsknoten gilt, und wobei die erste Regel ferner umfasst:
einen Verkehrsfilter, der den bestimmten Verkehrstyp herausfiltert; und
- einer Weiterleitungsregel, die eines oder mehreres umfasst von:
einer Zielschnittstelle, die eine Schnittstelle identifiziert, an die das Paket weitergeleitet werden sollte,
einer Analyse-Engine-Adresse,
einer Identifikation einer Transportebenen-Markierung und
einem Header-Anreicherungsparameter.

12. Analysesteuerung in einem Kommunikationsnetzwerk mit dienstbasierter Architektur, wobei die Analysesteuerung Verarbeitungsschaltungsanordnung umfasst, die konfiguriert ist zum:
Erhalten einer Anzeige einer Analyserichtlinienregel, APR, wobei die APR Analysen anzeigt, die von einem Benutzerebenen-Funktionsknoten durchgeführt werden sollen;
Übersetzen der APR in mindestens eine Regel, die eine Bedingung zum Melden von Analysen an eine Netzwerkdatenanalysefunktion, NWDAF, oder zum Weiterleiten von Paketen an eine Analyse-Engine festlegt, wobei die Regel für eines gilt von: einem bestimmten Benutzer und einen bestimmten Verkehrstyp;
einem bestimmten Benutzer für alle Verkehrstypen; und
einem bestimmten Benutzerebenen-Funktionsknoten; und
Senden der mindestens einen Regel an den Benutzerebenen-Funktionsknoten.

13. Analysesteuerung nach Anspruch 12, die ferner zum Durchführen des Verfahrens nach einem der Ansprüche 2 bis 7 konfiguriert ist.

14. Analyserichtlinienserver, APS, wobei der APS Verarbeitungsschaltungsanordnung umfasst, die konfiguriert ist zum:
Speichern mindestens einer Analyserichtlinienregel, APR, die Analysen anzeigt, die von einem Benutzerebenen-Funktionsknoten durchgeführt werden sollen;
Bestimmen mindestens einer APR, die mit einem Filter assoziiert ist, in Reaktion (402) auf den Empfang eine APR-Anforderung, die den Filter umfasst, von einer Analysesteuerung, wobei der Filter eines oder mehreres umfasst von: einer Identifikation eines Benutzers,
einer Identifikation einer Benutzerebenen-Funktion und
einer Identifikation eines Verkehrstyps; und
Senden der mindestens einer mit dem Filter assoziierten APR an eine Analysesteuerung.

15. APS nach Anspruch 14, wobei die Verarbeitungsschaltungsanordnung ferner konfiguriert ist zum:
Senden einer APR-Benachrichtigungsnachricht, die eine Anzeige der aktualisierten oder neuen APR umfasst, an die Analysesteuerung in Reaktion auf eine aktualisierte oder neue APR im APS.

16. Benutzerebenen-Funktion, UPF, umfassend Verarbeitungsschaltungsanordnung, die konfiguriert ist zum:
Empfangen mindestens einer Regel, die eine Bedingung zum Melden von Analysen an eine Netzwerkdatenanalysefunktion, NWDAF, oder zum Weiterleiten von Paketen an eine Analyse-Engine festlegt, von der Analysesteuerung, wobei die Regel für eines gilt von:
einem bestimmten Benutzer und einen bestimmten Verkehrstyp; einem bestimmten Benutzer ungeachtet des Verkehrstyps; und einem bestimmten Benutzerebenen-Funktionsknoten; und
Melden oder Weiterleiten von Verkehr, der an der UPF empfangen wird, basierend auf der mindestens einen Regel.

17. UPF nach Anspruch 16, wobei die mindestens eine Regel eine erste Regel umfasst, wobei die erste Regel eines oder mehreres umfasst von:
einer Metrik-Identifikation,
einer Meldungsbedingung,
einer Identifikation einer zweiten Regel, die sequenziell nach der ersten Regel ausgeführt werden soll, und einer Analyse-Engine-Adresse;
wobei die erste Regel mindestens eines umfassen von:
- einer Analysemeldungsregel, ARR, die für einen bestimmten Benutzer und einen bestimmten Verkehrstyp gilt, und wobei die erste Regel ferner umfasst:
eine Identifikation des bestimmten Benutzers;
einen Verkehrsfilter, der den bestimmten Verkehrstyp herausfiltert;
- einer Sitzungsanalysemeldungsregel, SARR, die für einen bestimmten Benutzer gilt, und wobei die erste Regel ferner umfasst:
eine Identifikation des bestimmten Benutzers;
- einer Knotenanalysemeldungsregel, NARR, die für einen bestimmten Benutzereben-Funktionsknoten gilt, und wobei die erste Regel ferner umfasst:
einen Verkehrsfilter, der den bestimmten Verkehrstyp herausfiltert; und
- einer Weiterleitungsregel, die eines oder mehreres umfasst von:
einer Zielschnittstelle, die eine Schnittstelle identifiziert, an die das Paket weitergeleitet werden sollte,
einer Analyse-Engine-Adresse,
einer Identifikation einer Transportebenen-Markierung und
einem Header-Anreicherungsparameter.

## Revendications

1. Procédé, dans un dispositif de commande d'analyse dans un réseau de communication à architecture basée sur service, le procédé comprenant :
l'obtention (301) d'une indication d'une règle de politique d'analyse, APR, dans lequel l'APR indique une analyse à réaliser par un noeud de fonction de plan utilisateur ;
la traduction (302) de l'APR en au moins une règle définissant une condition pour rapporter une analyse à une fonction d'analyse de données de réseau, NWDAF, ou
pour acheminer des paquets jusqu'à un moteur d'analyse,
dans lequel la règle s'applique à l'un parmi : un utilisateur particulier et un type de trafic particulier ; un utilisateur particulier pour tous les types de trafic ; et un noeud de fonction de plan utilisateur particulier ; et
la transmission (303) de l'au moins une règle au noeud de fonction de plan utilisateur.

2. Procédé selon la revendication précédente, dans lequel l'étape d'obtention de l'indication de l'APR comprend :
la transmission, à un serveur de politique d'analyse, APS, d'un message de demande d'APR comprenant un filtre,
dans lequel le filtre comprend une ou plusieurs parmi :
une identification d'un utilisateur, une identification d'une fonction de plan utilisateur, et une identification d'un type de trafic ; et
la réception d'un message de réponse d'APR comprenant l'indication de l'APR.

3. Procédé selon la revendication 2, dans lequel le message de demande d'APR comprend une identification d'un utilisateur, et dans lequel l'APR est associée à l'identification de l'utilisateur.

4. Procédé selon la revendication 2 ou 3, comprenant en outre :
l'obtention de l'indication de l'APR en réponse à un message de notification d'établissement de session d'unité de données de protocole, PDU, depuis une fonction de gestion de session, SMF, le procédé comprenant en outre en particulier l'abonnement en premier à la SMF pour recevoir des notifications lorsqu'une nouvelle session PDU est établie.

5. Procédé selon la revendication 1, dans lequel l'étape d'obtention de l'indication de l'APR comprend :
en réponse à un abonnement à des notifications d'APR au niveau d'un serveur de politique d'analyse, APS, la réception de l'APR depuis l'APS.

6. Procédé selon l'une quelconque des revendications précédentes, dans lequel l'APR indique un niveau de granularité de rapport ou un niveau de précision, dans lequel en particulier le niveau de granularité de rapport comprend une indication de rapporter un ou plusieurs parmi : un niveau par utilisateur, un niveau par groupe d'utilisateurs, un niveau par application, un niveau par type d'application, un niveau par dispositif, un niveau par type de dispositif, un niveau par zone ou emplacement d'équipement utilisateur, un niveau par fonction de plan utilisateur, un niveau par groupe de fonctions de plan utilisateur, un niveau par zone de fonction de plan utilisateur, un niveau par nom de réseau de données, DNN, ou par identifiant d'accès à un réseau de données, DNAI, pour une liaison montante ou pour une liaison descendante, ou pour une période de temps particulière.

7. Procédé selon l'une quelconque des revendications précédentes, dans lequel l'au moins une règle comprend une première règle, dans lequel la première règle comprend une ou plusieurs parmi :
une identification de métrique,
une condition de rapport,
une identification d'une deuxième règle à exécuter séquentiellement après la première règle, et
une adresse de moteur d'analyse ;
et/ou
au moins l'une parmi :
- une règle de rapport d'analyse, ARR, s'appliquant à un utilisateur particulier et à un type de trafic particulier, et dans lequel la première règle comprend en outre :
une identification de l'utilisateur particulier,
un filtre de trafic filtrant le type de trafic particulier ;
- une règle de rapport d'analyse de session, SARR, s'appliquant à un utilisateur particulier pour tous les types de trafic, et dans lequel la première règle comprend en outre :
une identification de l'utilisateur particulier ;
- une règle de rapport d'analyse de noeud, NARR, s'appliquant à un noeud de fonction de plan utilisateur particulier, et dans lequel la première règle comprend en outre :
un filtre de trafic filtrant le type de trafic particulier ; et
- une règle d'acheminement comprenant un ou plusieurs parmi :
une interface de destination identifiant une interface jusqu'à laquelle le paquet doit être acheminé,
une adresse de moteur d'analyse,
une identification de marquage de niveau de transport, et
un paramètre d'enrichissement d'en-tête.

8. Procédé dans un serveur de politique d'analyse, APS, le procédé comprenant :
le stockage (401) d'au moins une règle de politique d'analyse indiquant une analyse à réaliser par un noeud de fonction de plan utilisateur ;
en réponse (402) à la réception d'une demande d'APR depuis un dispositif de commande d'analyse comprenant un filtre, dans lequel le filtre comprend une ou
plusieurs parmi : une identification d'un utilisateur, une identification d'une fonction de plan utilisateur, et une identification d'un type de trafic, la détermination d'au moins une APR associée au filtre, et la transmission (403) de l'au moins une APR associée au filtre à un dispositif de commande d'analyse.

9. Procédé selon la revendication 8, comprenant en outre :
en réponse à une APR mise à jour ou à une nouvelle APR dans l'APS,
la transmission d'un message de notification d'APR au dispositif de commande d'analyse comprenant une indication de l'APR mise à jour ou de la nouvelle APR.

10. Procédé dans une fonction de plan utilisateur, UPF, le procédé comprenant :
la réception (501) d'au moins une règle depuis un dispositif de commande d'analyse définissant une condition pour rapporter une analyse à une fonction d'analyse de données de réseau, NWDAF, ou pour acheminer des paquets jusqu'à un moteur d'analyse, dans lequel la règle s'applique à l'un parmi : un utilisateur particulier et un type de trafic particulier ; un utilisateur particulier indépendamment du type de trafic ; et un noeud de fonction de plan utilisateur particulier ; et
le rapport (502) ou l'acheminement d'un trafic reçu au niveau de l'UPF sur la base de l'au moins une règle.

11. Procédé selon la revendication 10, dans lequel l'au moins une règle comprend une première règle, dans lequel la première règle comprend une ou plusieurs parmi :
une identification de métrique,
une condition de rapport,
une identification d'une deuxième règle à exécuter séquentiellement après la première règle, et
une adresse de moteur d'analyse ;
dans lequel la première règle comprend au moins l'une parmi :
- une règle de rapport d'analyse, ARR, s'appliquant à un utilisateur particulier et à un type de trafic particulier, et dans lequel la première règle comprend en outre :
une identification de l'utilisateur particulier,
un filtre de trafic filtrant le type de trafic particulier ;
- une règle de rapport d'analyse de session, SARR, s'appliquant à un utilisateur particulier, et dans lequel la première règle comprend en outre :
une identification de l'utilisateur particulier ;
- une règle de rapport d'analyse de noeud, NARR, s'appliquant à un noeud de fonction de plan utilisateur particulier, et dans lequel la première règle comprend en outre :
un filtre de trafic filtrant le type de trafic particulier ; et
- une règle d'acheminement comprenant un ou plusieurs parmi :
une interface de destination identifiant une interface jusqu'à laquelle le paquet doit être acheminé,
une adresse de moteur d'analyse,
une identification de marquage de niveau de transport, et
un paramètre d'enrichissement d'en-tête.

12. Dispositif de commande d'analyse dans un réseau de communication à architecture basée sur service, le dispositif de commande d'analyse comprenant une circuiterie de traitement configurée pour :
obtenir une indication d'une règle de politique d'analyse, APR, dans lequel l'APR indique une analyse à réaliser par un noeud de fonction de plan utilisateur ;
traduire l'APR en au moins une règle définissant une condition pour rapporter une analyse à une fonction d'analyse de données de réseau, NWDAF, ou pour acheminer des paquets jusqu'à un moteur d'analyse, dans lequel la règle s'applique à l'un parmi : un utilisateur particulier et un type de trafic particulier ; un utilisateur particulier pour tous les types de trafic ;
et un noeud de fonction de plan utilisateur particulier ; et
transmettre l'au moins une règle au noeud de fonction de plan utilisateur.

13. Dispositif de commande d'analyse selon la revendication 12, configuré pour réaliser le procédé selon l'une quelconque des revendications 2 à 7.

14. Serveur de politique d'analyse, APS, l'APS comprenant une circuiterie de traitement configurée pour :
stocker au moins une règle de politique d'analyse indiquant une analyse à réaliser par un noeud de fonction de plan utilisateur ;
en réponse à la réception d'une demande d'APR depuis un dispositif de commande d'analyse comprenant un filtre,
dans lequel le filtre comprend une ou plusieurs parmi :
une identification d'un utilisateur, une identification d'une fonction de plan utilisateur, et une identification d'un type de trafic, déterminer au moins une APR associée au filtre, et
transmettre l'au moins une APR associée au filtre à un dispositif de commande d'analyse.

15. APS selon la revendication 14, dans lequel la circuiterie de traitement est en outre configurée pour :
en réponse à une APR mise à jour ou à une nouvelle APR dans l'APS, transmettre un message de notification d'APR au dispositif de commande d'analyse comprenant une indication de l'APR mise à jour ou de la nouvelle APR.

16. Fonction de plan utilisateur, UPF, comprenant une circuiterie de traitement configurée pour :
recevoir au moins une règle depuis un dispositif de commande d'analyse définissant une condition pour rapporter une analyse à une fonction d'analyse de données de réseau, NWDAF, ou pour acheminer des paquets jusqu'à un moteur d'analyse, dans laquelle la règle s'applique à l'un parmi : un utilisateur particulier et
un type de trafic particulier ; un utilisateur particulier indépendamment du type de trafic ; et un noeud de fonction de plan utilisateur particulier ; et
rapporter ou acheminer un trafic reçu au niveau de l'UPF sur la base de l'au moins une règle.

17. UPF selon la revendication 16, dans laquelle l'au moins une règle comprend une première règle, dans laquelle la première règle comprend une ou plusieurs parmi :
une identification de métrique,
une condition de rapport,
une identification d'une deuxième règle à exécuter séquentiellement après la première règle, et
une adresse de moteur d'analyse ;
dans laquelle la première règle comprend au moins l'une parmi :
- une règle de rapport d'analyse, ARR, s'appliquant à un utilisateur particulier et à un type de trafic particulier, et dans laquelle la première règle comprend en outre :
une identification de l'utilisateur particulier,
un filtre de trafic filtrant le type de trafic particulier ;
- une règle de rapport d'analyse de session, SARR, s'appliquant à un utilisateur particulier, et dans laquelle la première règle comprend en outre :
une identification de l'utilisateur particulier ;
- une règle de rapport d'analyse de noeud, NARR, s'appliquant à un noeud de fonction de plan utilisateur particulier, et dans laquelle la première règle comprend en outre :
un filtre de trafic filtrant le type de trafic particulier ; et
- une règle d'acheminement comprenant un ou plusieurs parmi :
une interface de destination identifiant une interface jusqu'à laquelle le paquet doit être acheminé,
une adresse de moteur d'analyse,
une identification de marquage de niveau de transport, et
un paramètre d'enrichissement d'en-tête.
